# FASCICULE DE BREVET EUROPEEN

(11) **EP 0 682 556 B1**
(45) Date de publication et mention de la délivrance du brevet: **14.01.1998**
(21) Numéro de dépôt: 93915578.4
(22) Date de dépôt: 03.08.1993
(51) Int. Cl.: B01D 46/24

(54) **FILTRE POUR LE FILTRAGE DE GAZ CHARGES DE PARTICULES**
VORRICHTUNG ZUM FILTERN VON MIT TEILCHEN BELADENEM GAS
FILTER FOR FILTERING GASES CHARGED WITH PARTICLES

(30) Priorité: 05.08.1992 BE 9200701
(43) Date de publication de la demande: 22.11.1995
(73) Titulaire: SEGHERS ENGINEERING N.V., 2830 Willebroek (BE)
(72) Inventeur: PUTTAERT, Emiel, B-9100 Sint-Niklaas (BE)
(74) Mandataire: Bairiot-Delcoux, Mariette
(86) Numéro de dépôt international: BE9300052
(87) Numéro de publication internationale: WO9403260

(56) Documents cités:
- EP-A- 0 253 273
- EP-A- 0 402 032
- EP-A- 0 482 396
- GB-A- 2 155 354
- GB-A- 2 200 857

## Description

Cette invention concerne un filtre pour le filtrage en continu de gaz chargés de particules solides.

Des éléments filtrants poreux tubulaires qui peuvent notamment servir à dépoussiérer les gaz chauds sont connus. De tels "filtres en bougie" sont décrits par exemple dans le document EP-A-0 317 190.

On connait, d'une part, des filtres relativement petits qui sont destinés au filtrage en laboratoire et n'intègrent qu'un nombre limité de filtres en bougie (et qui ne conviennent donc que pour des débits de gaz assez faibles) et, d'autre part, des filtres plus grands pour le filtrage de gaz à l'échelle industrielle (avec des débits de gaz plus élevés).

Ces derniers sont utilisés pour éliminer des gaz de fumée chauds les matières qui pourraient nuire à l'environnement en polluant l'atmosphère. Le filtrage des gaz chauds peut également permettre de récupérer des matières précieuses, comme les métaux précieux, dans des procédés qui sont exécutés à haute température.

Il faut signaler que le refroidissement de gaz chauds chargés de particules, avant leur filtrage, ne constitue pas toujours une solution satisfaisante ou avantageuse.

Une des raisons en est que des produits de condensation et même de nouveaux produits indésirables peuvent se former dans certains cas lors du refroidissement de gaz chauds chargés de particules.

Des quantités d'énergie inacceptables peuvent également être perdues lors des processus de refroidissement.

La réalisation d'un filtre à gaz industriel pour débits de gaz élevés qui puisse résister à des températures hautes (de 500 à 900°C et plus) crée des problèmes qui trouvent notamment leur origine dans les tensions de dilatation difficiles à éviter en présence de variations importantes de la température.

Ces problèmes se compliquent si le filtre doit servir au filtrage à haute température de gaz contenant des substances chimiquement agressives (comme les gaz de fumée chauds qui contiennent du chlore, du soufre et du fluor).

On connaît par le document GB-A-2 155 354 un filtre pour retirer la poussière de gaz de combustion chauds sous pression, qui comprend une pluralité de filtres tubulaires en bougie. Différents plateaux plans, portant chacun une pluralité de bougies, sont disposés à différentes hauteurs à l'intérieur d'une enceinte. Malgré la présence de plusieurs étages de filtration, il n'est prévu qu'une seule entrée pour le gaz à filtrer.

Sa structure confère à ce filtre de l'état de la technique un encombrement important. En effet, les différents plateaux et leurs bougies respectives doivent être suffisamment écartés les uns des autres pour permettre l'accès du gaz aux bougies et l'évacuation des poussières.

En outre, cette structure n'est guère adéquate pour supporter les variations de pression engendrées lors du nettoyage périodique des filtres ni pour encaisser les dilatations résultant inévitablement des variations de températures.

La demande de brevet EP-A-0 253 373 propose un autre dispositif pour le dépoussiérage de gaz, comprenant une enceinte à l'intérieur de laquelle est suspendu un logement intérieur en forme de poire étanche aux gaz, dans le fond bombé duquel sont fixées des bougies filtrantes. Bien qu'il ne présente qu'une seule section de filtrage, ce dispositif est également relativement encombrant. Il ne présente toutefois pas les deux autres inconvénients mentionnés ci-dessus, car la forme bombée du fond permet de supporter l'inversion de pression lors du nettoyage, et la suspension dans l'enceinte permet d'éviter les problèmes de dilatation lors des variations de température. En outre, un tel dispositif est difficile à fabriquer; en particulier, la fixation des bougies au fond bombé du logement n'est pas aisée, ce qui pose des problèmes tant au stade de la fabrication qu'en cas de réparation.

L'invention a pour but de remédier aux différents inconvénients mentionnés ci-dessus en fournissant un filtre pour le filtrage en continu de gaz chargés de particules solides, compact, qui présente néanmoins plusieurs sections de filtrage, et qui soit capable de supporter les dilatations sans qu'il soit nécessaire de suspendre les sections de filtrage dans l'enceinte du filtre.

L'invention a pour objet un filtre pour le filtrage en continu à une température d'au moins 500°C de gaz de fumée chargés de particules solides, lequel se compose d'un corps de filtre qui contient au moins une section de filtrage comprenant un espace divisé en une chambre d'entrée et une chambre de sortie au moyen d'une paroi de séparation, dans laquelle sont montés des filtres tubulaires en bougie fermés à une extrémité, la surface extérieure et l'extrémité fermée des filtres en bougie se trouvant dans la chambre d'entrée et l'intérieur des filtres en bougie aboutissant dans la chambre de sortie, la chambre d'entrée étant munie d'au moins une entrée pour les gaz à filtrer et d'au moins une sortie pour les particules séparées par filtrage et la chambre de sortie étant munie d'au moins une sortie pour les gaz filtrés.

Dans le filtre conforme à l'invention, le corps du filtre possède une paroi latérale essentiellement cylindrique avec un axe vertical. Chaque section de filtrage est délimitée dans le bas par une paroi d'évacuation en forme d'entonnoir dont la partie étroite orientée vers le bas est raccordée à un moyen d'évacuation des particules séparées par filtrage. Le corps du filtre ainsi que les parois intérieures et les filtres en bougie de chaque section de filtrage sont composés de matières réfractaires et sont disposés de façon radiale ou concentrique et essentiellement symétrique par rapport à l'axe vertical de la paroi latérale cylindrique du corps du filtre. La paroi de séparation de chaque section de filtrage est composée d'une structure qui va en diminuant vers le bas et possède des gradins annulaires, la chambre d'entrée et la chambre de sortie de la section de filtrage se trouvant respectivement en-dessous et au-dessus de cette paroi de séparation, chaque chambre d'entrée étant ainsi délimitée vers le bas par la paroi d'évacuation et vers le haut par la paroi de séparation la ou les entrée(s) de gaz à filtrer étant située(s) dans la partie large de la chambre d'entrée, les filtres en bougie étant montés essentiellement de façon verticale dans des trous prévus dans les parties horizontales des gradins annulaires.

Chaque section de filtrage comporte au moins deux nervures de renforcement qui supportent les gradins annulaires de ladite paroi de séparation et qui sont fixées en direction radiale sur la paroi latérale du corps du filtre. Tous les éléments qui entrent en contact avec les gaz de fumée et/ou avec les particules solides, à l'exception des filtres en bougie, sont en acier inoxydable résistant à la température de fonctionnement du filtre et la paroi latérale du corps du filtre est munie extérieurement d'une isolation thermique.

Le corps du filtre et les structures qu'il contient peuvent également être munis d'autres nervures ou éléments de renforcement, l'important étant que tous ces éléments soient placés radialement, concentriquement et surtout symétriquement par rapport à l'axe vertical du corps du filtre et permettent une expansion thermique de l'ensemble de la structure sans que des tensions de dilatation inacceptables n'apparaissent dans le filtre, même lors d'importantes variations de température (par exemple entre 0°C et 900°C).

Selon une forme d'exécution avantageuse, le corps du filtre repose de préférence sur au moins trois appuis qui sont reliés entre eux et dont un est relié de manière fixe au corps du filtre tandis que les autres sont munis d'un palier à rouleaux horizontal de telle sorte que l'axe de chaque rouleau soit placé perpendiculairement à une droite dirigée vers l'appui fixe.

De préférence, dans chaque section de filtrage, au moins une paroi de répartition est placée entre les filtres en bougie et l'entrée pour les gaz à filtrer.

Durant l'utilisation du filtre, les filtres en bougie doivent être nettoyés régulièrement pour minimiser la perte de pression. C'est la raison pour laquelle la chambre de sortie de chaque section de filtrage est munie d'au moins un système distributeur d'air comprimé équipé de moyens destinés à souffler périodiquement un courant d'air comprimé à l'intérieur d'au moins une partie des filtres en bougie et à éliminer ainsi les particules filtrées de la surface extérieure des filtres en bougie.

Selon une forme d'exécution avantageuse, chaque section de filtrage est munie d'au moins deux (par exemple, trois, quatre ou plus) systèmes distributeurs d'air comprimé équipés chacun de moyens destinés à souffler périodiquement et chacun à leur tour un flux d'air comprimé à l'intérieur d'une partie des filtres en bougie et à éliminer ainsi les particules filtrées de la surface extérieure des filtres en bougie.

Les systèmes distributeurs d'air comprimé sont composés de tuyaux concentriques fixés à la paroi latérale du corps du filtre par des moyens de fixation montés radialement.

Selon une forme particulière d'exécution, la sortie pour les particules filtrées est un tuyau d'évacuation qui débouche dans un réservoir contenant de préférence un refroidisseur.

Ce réservoir est équipé de moyens destinés à éliminer les particules filtrées du réservoir et à maintenir le niveau de ces particules dans le réservoir de telle sorte que le tuyau d'évacuation qui débouche dans le réservoir reste bouché par les particules filtrées.

Les éléments du filtre en contact avec les gaz à filtrer ou filtrés ou avec les particules filtrées doivent bien entendu être réfractaires, au moins jusqu'à la température de fonctionnement du filtre. Selon une forme d'exécution particulière, le filtre résiste à des températures de 900°C.

Selon une forme d'exécution préférée, tous les éléments du filtre en contact avec les gaz à filtrer ou filtrés ou avec les particules filtrées résistent chimiquement jusqu'à 900°C aux gaz de fumée qui contiennent des substances chimiquement agressives comme le chlore, les composés sulfureux et d'autres constituants de ce genre.

Selon une forme d'exécution avantageuse, le corps du filtre contient au moins deux sections de filtrage placées l'une au-dessus de l'autre.

Selon une forme d'exécution particulière d'un filtre de ce genre avec deux sections de filtrage ou plus, la sortie des gaz filtrés de chaque section de filtrage, à l'exception de la section supérieure, est une chambre annulaire qui, dans le bas, est en liaison ouverte avec la chambre de sortie de la section de filtrage et qui est délimitée latéralement par la paroi latérale cylindrique du corps du filtre et par une paroi latérale cylindrique concentrique de la chambre d'entrée de la section de filtrage immédiatement supérieure et qui est délimitée, dans le haut, par la partie horizontale du gradin annulaire supérieur de la paroi de séparation de la section de filtrage immédiatement supérieure, des ouvertures étant pratiquées dans cette partie horizontale pour permettre à la chambre annulaire d'être en liaison avec la chambre de sortie de la section de filtrage supérieure.

Selon une forme d'exécution particulière d'un tel filtre avec deux sections de filtrage ou plus, le moyen d'évacuation des particules filtrées de chaque section de filtrage, à l'exception de la section inférieure, est un tuyau d'évacuation vertical relié à la partie étroite de la paroi inférieure en forme d'entonnoir de la section de filtrage et placé concentriquement dans le tuyau d'évacuation de la section de filtrage immédiatement inférieure.

D'autres particularités et avantages de l'invention ressortiront de la description suivante d'un exemple d'exécution particulier, par référence aux figures ci-jointes.

La Fig. 1 est une vue schématique en coupe verticale d'un filtre conforme à l'invention; cette vue montre des détails qui, en réalité, ne sont pas orientés dans le plan de la coupe.

La Fig. 2 est une coupe horizontale suivant la ligne II-II de la Fig. 1 qui montre, dans les différents segments, différents détails superposés.

La Fig. 3 est un détail de la fixation d'un filtre en bougie et d'une conduite d'air comprimé.

La Fig. 4 est une représentation de la liaison entre les appuis et de l'orientation des paliers à rouleaux par rapport à l'appui fixe.

La Fig. 5 est un détail d'une ouverture d'équilibre.

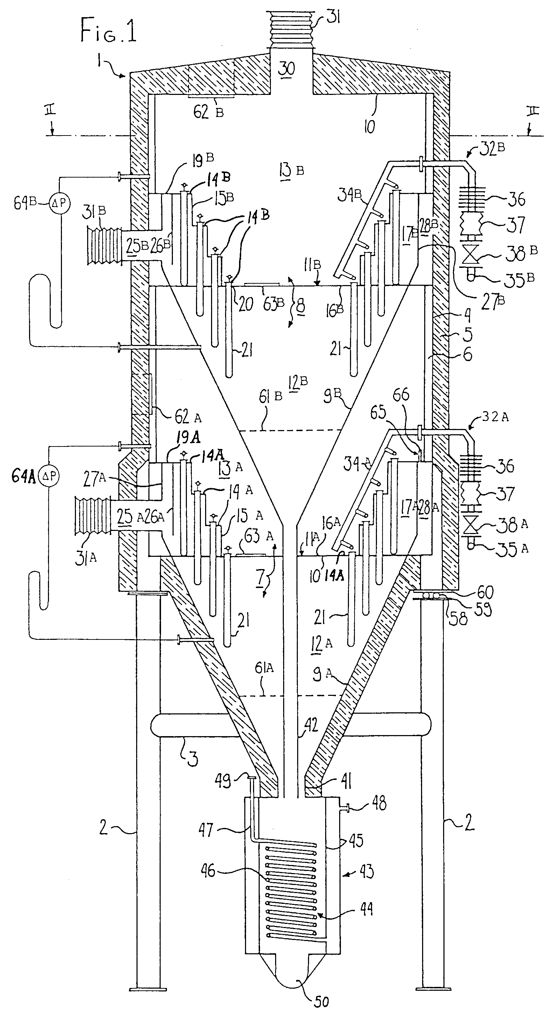

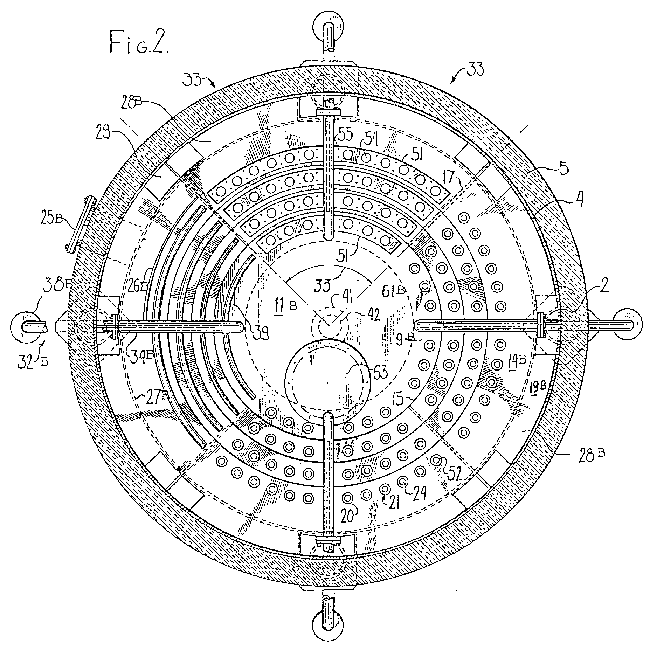

Le filtre représenté dans les Fig. 1 et 2 est composé d'un corps de filtre 1 placé sur des appuis 2 qui sont reliés entre eux au moyen de barres de liaison 3.

Le corps du filtre 1 possède une paroi latérale cylindrique 4 et est monté verticalement et concentriquement par rapport à un axe central. La construction concentrique du filtre permet la dilatation des matériaux à la suite de températures élevées dans le sens de leur fibre normale sans apparition de tensions. La paroi latérale 4 est munie d'une isolation thermique 5. Cela permet aux gaz de conserver leur température dans le filtre, ce qui est important car cela empêche la formation de zones plus froides et permet d'éviter la formation de produits de condensation et de tensions thermiques tout en conservant la chaleur des gaz chauds et en la récupérant intégralement en aval.

Des renforts radiaux 6 sont placés contre la paroi latérale cylindrique 4 dans le corps du filtre 1.

Le corps du filtre 1 comprend deux sections de filtrage 7, 8 qui sont superposées. Chaque section de filtrage est délimitée dans le bas par une paroi en forme d'entonnoir 9A,9B. La section de filtrage inférieure 7 est délimitée dans le haut par la paroi en forme d'entonnoir 9B qui délimite dans le bas la section de filtrage supérieure 8. La section de filtrage supérieure 8 est délimitée dans le haut par une paroi plane 10.

Chaque section de filtrage 7, 8 est divisée en une chambre d'entrée 12A,12B et une chambre de sortie 13A,13B par une paroi de séparation 11A,11B. La paroi de séparation 11A,11B possède principalement la forme d'un cône tronqué inversé qui est exécuté en forme de gradin et est donc composé de bagues planes 14A,14B et de bagues cylindriques 15A,15B successives reliées entre elles. La partie inférieure de cette structure en gradins qui va en diminuant vers le bas est un disque rond et plat 16A,16B.

Les gradins annulaires de la paroi de séparation 11A,11B sont supportés par des nervures de renforcement 17A,17B qui sont fixées en direction radiale sur la paroi latérale 4 du corps du filtre 1.

Les bagues planes 14A,14B et le disque rond et plat 16A,16B de la paroi de séparation 11A,11B sont munis d'ouvertures 20 dans lesquelles sont placés des filtres en bougie 21 suspendus verticalement vers le bas, la surface extérieure 22 et l'extrémité fermée 23 des filtres en bougie se trouvant dans la chambre d'entrée 12A,12B et l'intérieur 24 des filtres en bougie 21 débouchant dans la chambre de sortie 13A,13B.

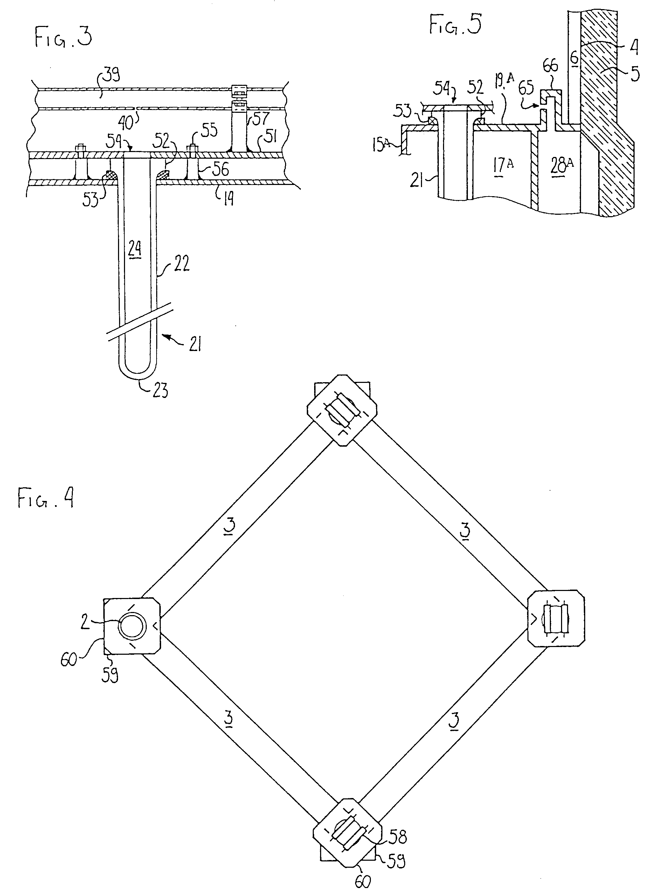

Les filtres en bougie 21 sont répartis en schémas concentriques au-dessus des parties horizontales de la paroi de séparation 11A,11B. La façon dont les filtres en bougie 21 sont fixés sera décrite en détail plus loin par référence à la Fig. 3.

La chambre d'entrée 12A,12B de chaque section de filtrage 7,8 est munie d'une entrée latérale 25A,25B pour les gaz à filtrer.

Une paroi de répartition 26A,26B fixée sur la face inférieure de la paroi de séparation 11A,11B est prévue entre l'entrée latérale 25A,25B et les filtres en bougie 21.

Les Fig. 1 et 2 montrent que la paroi latérale de la chambre de sortie 13A,13B coïncide avec la paroi latérale cylindrique 4 du corps du filtre 1. La paroi latérale cylindrique 27A,27B de la chambre d'entrée 12A,12B possède un diamètre plus petit que la paroi latérale cylindrique 4 du corps du filtre 1. Une chambre annulaire 28A,28B se trouve entre la paroi latérale 27A,27B de la chambre d'entrée 12A,12B et la paroi latérale du corps du filtre 1.

La chambre annulaire 28A qui est délimitée du côté situé vers l'axe du cylindre, par la paroi latérale cylindrique 27A de la chambre d'entrée 12A de la section de filtrage inférieure 7, est complètement fermée à l'exception d'une ouverture d'équilibre 65 et n'est donc pas en liaison avec la chambre d'entrée 12A ou la chambre de sortie 13A de la section de filtrage inférieure 7.

Au moins une ouverture d'équilibre 65 vers la chambre de sortie 13A de la section de filtrage inférieure 7 est prévue par segment 33 dans cette chambre annulaire 28A en installant une conduite 66 placée verticalement et fermée vers le haut sur la bague horizontale plane supérieure 19A de la paroi de séparation 11A de la section de filtrage inférieure 7. L'ouverture d'équilibre 65 qui est visible plus en détail dans la Fig. 5 assure un équilibre des pressions à l'intérieur et à l'extérieur de la chambre 28A quelles que soient les variations de température.

Par contre, la chambre annulaire 28B délimitée du côté situé vers l'axe du cylindre, par la paroi latérale cylindrique 27B de la chambre d'entrée 12B de la section de filtrage supérieure 8 est, elle, en liaison dans le bas avec la chambre de sortie 13A de la section de filtrage inférieure 7 et est délimitée dans le haut par la bague plane supérieure 19B de la paroi de séparation 11B de la section de filtrage supérieure 8. Des ouvertures 29 sont prévues dans cette bague plane 19B, ce qui permet à la chambre annulaire 28B d'être en liaison avec la chambre de sortie 13B de la section de filtrage supérieure 8.

La sortie de la chambre de sortie 13B de la section de filtrage supérieure 8 est une ouverture d'écoulement centrale 30.

Les entrées latérales 25A,25B et l'ouverture d'écoulement centrale 30 sont prévues de compensateurs 31A,31B,31 pour permettre la libre dilatation thermique du filtre.

Les filtres en bougie 21 sont nettoyés en soufflant de l'air comprimé en sens inverse par l'intérieur 24 des filtres en bougie 21. Un système distributeur d'air comprimé 32A,32B est utilisé à cet effet. Chaque section de filtrage 7,8 est divisée en quatre segments 33 alimentés chacun par une conduite d'alimentation en air comprimé 34A,34B. Les conduites d'alimentation en air comprimé 34A,34B des différents segments 33 d'une section de filtrage 7,8 sont montées radialement et reliées à une conduite circulaire froide 35A,35B. Les ailettes de refroidissement et les compensateurs 37 nécessaires à cet effet sont prévus sur les conduites d'alimentation en air comprimé 34A,34B. Chaque segment 33 est purgé séparément par un clapet froid automatique 38A,38B. Les filtres en bougie 21 sont purgés par section de filtrage 7,8 et par segment 33.

La Fig. 2 représente une vue d'en haut d'un système distributeur d'air comprimé 32B dans un segment 33 de la section de filtrage supérieure 8.

Les Fig. 1 à 3 montrent que l'air comprimé est amené au-dessus des filtres en bougie 21 à l'aide de tubes concentriques 39 fixés à la paroi latérale 4 du corps du filtre 1 par des moyens de fixation montés radialement. En dessous de ces tubes 39, un trou calibré 40 par lequel l'air comprimé est soufflé verticalement vers le bas est prévu centralement au-dessus de l'ouverture d'évacuation des filtres en bougie 21. Grâce à la construction radiale et concentrique, les trous calibrés 40 restent dans une position correcte au-dessus de l'axe des filtres en bougie 21 en cas d'élévation de la température jusqu'à la température d'utilisation.

Les particules solides filtrées (par exemple, des cendres volantes) qui sont éliminées de la surface extérieure 22 des filtres en bougie 21 tombent dans les entonnoirs coniques définis par les parois en forme d'entonnoir 9A,9B. Les sorties pour ces particules solides sont les tuyaux d'évacuation 41,42 dont l'axe coïncide. Le tuyau d'évacuation 41 de la section de filtrage inférieure 7 possède un diamètre plus grand que le tuyau d'évacuation 42 de la section de filtrage supérieure 8 et se trouve autour de ce tuyau d'évacuation 42 de la section de filtrage supérieure 8.

Dans le bas, tous les tuyaux d'évacuation 41,42 débouchent dans un réservoir fermé 43 à refroidisseur intégré 44. Le niveau minimum des particules filtrées dans ce réservoir 43 assure l'étanchement entre les différentes sections de filtrage internes du filtre et l'extérieur.

Le refroidisseur 44 se compose, d'une part, d'une double paroi 45 et, d'autre part, d'un tuyau 46 disposé en spirale avec un tuyau de sortie 47 pour l'air réchauffé. L'air froid pénètre par l'entrée 48 dans le haut de la double paroi 45 et se dirige ensuite vers le bas dans le tuyau 46 disposé en spirale et dans le tuyau de sortie pour ensuite laisser s'échapper l'air réchauffé par la sortie 49 dans le haut du réservoir 43.

Une vis transporteuse 50 (qui n'est pas représentée en détail) est prévue dans le bas du refroidisseur 44 pour évacuer les particules filtrées. L'entraînement de cette vis transporteuse 50 est assuré par une détection de hauteur des particules dans le réservoir 43 au-dessus du refroidisseur 44 de manière à garantir un niveau minimum.

Au démarrage du filtre, le réservoir 43 est rempli de sable jusqu'au niveau minimum pour obtenir un étanchement entre les différentes sections de filtrage du filtre et par rapport à l'extérieur de celui-ci.

Les Fig. 2 et 3 montrent comment les filtres en bougie 21 sont fixés sur les parties horizontales 14A,14B des gradins annulaires à l'aide de plaques de pression 51 en forme de segment. Les filtres en bougie 21 sont munis, dans le haut, d'un collet 52 comprimé entre la partie horizontale 14 et la plaque de pression 51 en forme de segment, des bagues de garniture 53 réfractaires étant intercalées. Des trous 54 dont le diamètre correspond à celui de l'ouverture d'évacuation des filtres en bougie 21 sont prévus dans les plaques de pression 51 en forme de segment. Les plaques de pression 51 en forme de segment sont fixées sur les parties horizontales 14A,14B des gradins à l'aide de boulons 55. Une butée 56 de longueur calibrée est prévue à chaque boulon de liaison 55 pour éviter que le collet 52 du filtre en bougie 21 ne soit endommagé en serrant trop fort les boulons 55.

La Fig. 2 représente une vue d'en haut des plaques de pression 51 et des boulons 55 dans un segment de la section de filtrage 8.

La Fig. 3 montre également un élément d'appui 57 qui est soudé dans le bas sur la plaque de pression 51 et permet de maintenir le tube concentrique 39 à la bonne place.

Tous les éléments du filtre qui entrent en contact avec les gaz chauds ou les particules solides chaudes sont fabriqués en acier inoxydable résistant aux températures élevées (à l'exception des filtres en bougie 21 qui se composent de fibres céramiques poreuses).

L'acier inoxydable utilisé résiste également au chlore, au fluor ou aux composés sulfureux qui peuvent se trouver dans les gaz à filtrer (par exemple, dans les gaz de fumée chauds).

La Fig. 4 représente les appuis 2 et leurs barres de liaison 3. Le corps du filtre 1 repose sur quatre appuis 2 reliés par quatre barres de liaison 3. Un appui 2 est relié de manière fixe au corps du filtre 1 tandis que les autres sont munis d'un palier à rouleaux 58 pour permettre une libre dilatation du corps du filtre 1. Les appuis 2 sont reliés entre eux pour absorber les forces de friction des paliers à rouleaux 58. Pour ce faire, les appuis 2 sont interrompus, au-dessus des barres de liaison 3, par des plaques horizontales 59,60 entre lesquelles se trouvent les paliers à rouleaux 58. Chaque palier à rouleaux horizontal 58 est configuré de telle façon que l'axe de chaque rouleau soit placé perpendiculairement à une droite dirigée vers l'appui fixe 2.

Le filtre conforme à l'invention convient particulièrement pour éliminer les cendres volantes des gaz de fumée chauds.

Comme le montre la Fig. 1, les gaz chargés de particules solides sont répartis, avant d'entrer dans le filtre, et envoyés vers l'entrée latérale 25A,25B des deux sections de filtrage 7,8 où ils sont répartis sur les filtres en bougie 21 par une paroi de répartition 26A,26B.

Les gaz chargés de particules solides traversent la surface extérieure 22 des filtres en bougie 21 sur lesquels sont retenues les particules. Le gaz filtré passe par l'intérieur 24 des filtres en bougie 21 pour se diriger vers la chambre de sortie 13A,13B de la section de filtrage concernée 7,8. Le gaz filtré de la section de filtrage inférieure 7 quitte cette section de filtrage 7 en passant par la chambre annulaire 28B et se dirige vers la chambre de sortie 13B de la section de filtrage supérieure 8. Les gaz filtrés des deux sections de filtrage 7,8 quittent ensemble le filtre en passant par l'ouverture d'écoulement centrale 30 dans la section de filtrage supérieure 8.

A la suite de la retenue des particules chaudes par les filtres en bougie 21, la différence de pression entre chaque chambre d'entrée 12A,12B et la chambre de sortie 13A,13B correspondante augmentera progressivement. Un appareil de mesure 64A,64B est prévu pour mesurer cette différence de pression. Etant donné que les filtres en bougie 21 sont traversés par section, en parallèle, l'encrassement sera uniforme sur ces filtres en bougie 21.

Grâce à une minuterie qui commande le clapet d'air comprimé 38A,38B par segment 33, les filtres en bougie 21 sont nettoyés à intervalles réguliers en y soufflant de l'air comprimé en sens inverse. Il ne faut pas arrêter l'amenée des gaz chargés de particules solides vers le filtre.

L'air comprimé est envoyé vers les filtres en bougie 21 par segment et par section de filtrage 7,8 durant une fraction de seconde par l'intermédiaire des systèmes distributeurs d'air comprimé 32A,32B. De cette manière, tous les filtres en bougie 21 sont purgés l'un après l'autre, c'est-à-dire section de filtrage 7,8 par section de filtrage 8,7 et segment 33 par segment 33.

Régulièrement, mais surtout durant le nettoyage, les particules chaudes sur la surface extérieure 22 des filtres en bougie 21 tombent vers le bas où elles sont récoltées dans la paroi inférieure 9A,9B en forme d'entonnoir qui constitue la face inférieure de chaque section de filtrage 7,8. Dans chaque entonnoir defini par les parois en forme d'entonnoir 9A,9B, une grille plate en acier 61A,61B munie de larges ouvertures carrées est prévue pour recueillir les filtres en bougie 21 éventuellement cassé. Cette grille 61A,61B sert également de sol pour effectuer un contrôle ou des travaux d'entretien.

Les particules glissent vers le bas le long de la paroi inférieure 9A,9B en forme d'entonnoir. Les particules qui proviennent de la section de filtrage supérieure 8 tombent vers le bas en passant par le tuyau d'évacuation central 42. Les particules qui proviennent de la section de filtrage inférieure 7 tombent vers le bas dans le réservoir 43 en passant par le tuyau d'évacuation 41 situé autour du tuyau d'évacuation 42 de la section de filtrage supérieure 8.

L'entretien du filtre se limite au remplacement des filtres en bougie 21 qui sont encrassés et/ou cassés.

Une trappe d'accès 62A,62B est prévue, pour chaque section de filtrage 7,8, dans la paroi latérale 4 du corps du filtre 1 pour accéder à la chambre de sortie 13A de la section de filtrage inférieure 7 et dans la paroi supérieure plane 10 pour accéder à la chambre de sortie 13B de la section de filtrage supérieure 8, pour l'entretien de ces sections de filtrage 7,8. Une trappe 63A,63B servant à atteindre chaque chambre d'entrée 12A,12B depuis la chambre de sortie 13A,13B correspondante, se trouve à la partie inférieure de la paroi de separation 11A, 11B en forme de gradin 11, dans le disque rond plat 16A,16B.

Grâce à la construction spécifique, ce filtre peut être utilisé pour une large gamme de débits de gaz et de concentrations de particules.

L'adaptation du diamètre du corps du filtre 1 et du nombre de filtres en bougie 21 par section de filtrage 7,8, du nombre de sections de filtrage par corps de filtre 1 et du nombre de corps de filtres 1, permet d'adapter le filtre aux caractéristiques des gaz chargés de particules, à savoir le débit entrant et la concentration en poussières.

## Revendications

1. Filtre pour le filtrage en continu à une température d'au moins 500°C de gaz de fumée chargés de particules solides, lequel se compose d'un corps de filtre (1) qui contient au moins une section de filtrage (7,8) comprenant un espace divisé en une chambre d'entrée (12A,12B) et une chambre de sortie (13A,13B) au moyen d'une paroi de séparation (11A,11B) dans laquelle sont montés des filtres tubulaires en bougie (21) qui sont fermés à une extrémité, la surface extérieure (22) et l'extrémité fermée (23) des filtres en bougie (21) se trouvant dans la chambre d'entrée (12A,12B) et l'intérieur (24) des filtres en bougie aboutissant dans la chambre de sortie (13A 13B), la chambre d'entrée (12A,12B) étant munie d'au moins une entrée (25A,25B) pour les gaz à filtrer et d'au moins une sortie (41,42) pour les particules séparées par filtrage et la chambre de sortie (13A,13B) étant munie d'au moins une sortie (28B,30) pour les gaz filtrés, dans lequel le corps du filtre (1) possède une paroi latérale essentiellement cylindrique, avec un axe vertical, et dans lequel chaque section de filtrage (7,8) est délimitée dans le bas par une paroi d'évacuation (9A,9B) en forme d'entonnoir dont la partie étroite orientée vers le bas est raccordée à un moyen d'évacuation (41,42) des particules séparées par filtrage, et dans lequel le corps du filtre (1) ainsi que les parois intérieures (4,9A,9B,10,11A,11B, 27A,27B) et les filtres en bougie (21) de chaque section de filtrage (7,8) sont composés de matières réfractaires et sont disposés de façon radiale ou concentrique et essentiellement symétrique par rapport à l'axe vertical de la paroi latérale cylindrique (4) du corps du filtre (1);
caractérisé en ce que la paroi de séparation (11A,11B) de chaque section de filtrage (7,8) est composée d'une structure qui va en diminuant vers le bas et possède des gradins annulaires, la chambre d'entrée (12A,12B) et la chambre de sortie (13A,13B) de la section de filtrage se trouvant respectivement en dessous et au-dessus de cette paroi de séparation (11A,11B), la chambre d'entrée (12A,12B) de chaque section étant ainsi délimitée vers le bas par la paroi d'évacuation (9A,9B) et vers le haut par la paroi de séparation (11A,11B), la ou les entrées (25A,25B) de gaz à filtrer étant située(s) dans la partie large de la chambre d'entrée (12A,12B), les filtres en bougie (21) étant montés essentiellement de façon verticale dans des trous (20) prévus dans les parties horizontales (14A,14B,16A,16B) des gradins annulaires, chaque section de filtrage comportant au moins deux nervures de renforcement (17A,17B) qui supportent les gradins annulaires de ladite paroi de séparation (11A,11B) et qui sont fixées en direction radiale sur la paroi latérale (4) du corps du filtre (1), tous les éléments qui entrent en contact avec les gaz de fumée et/ou avec les particules solides, à l'exception des filtres en bougie (21), étant en acier inoxydable résistant à la température de fonctionnement du filtre et la paroi latérale (4) du corps du filtre (1) étant munie extérieurement d'une isolation thermique (5).

2. Filtre suivant la revendication 1, caractérisé en ce que le corps du filtre (1) s'appuie sur au moins trois appuis (2) qui sont reliés entre eux et dont l'un est relié de manière fixe au corps du filtre (1) tandis que les autres sont munis d'un palier à rouleaux horizontal (58) de telle sorte que l'axe de chaque rouleau (58) soit placé perpendiculairement à une droite dirigée vers l'appui fixe (2).

3. Filtre suivant l'une quelconque des revendications précédentes, caractérisé en ce qu'au moins une paroi de répartition (26A,26B) est placée dans chaque section de filtrage (7,8) entre les filtres en bougie (21) et l'entrée (25A,25B) pour les gaz à filtrer.

4. Filtre suivant l'une quelconque des revendications précédentes, caractérisé en ce que la chambre de sortie (13A,13B) de chaque section de filtrage (7,8) est munie d'au moins un système distributeur d'air comprimé (32A,32B) équipé de moyens destines a souffler périodiquement un courant d'air comprimé à l'intérieur (24) d'au moins une partie des filtres en forme de bougie (21) et à éliminer ainsi les particules filtrées de la surface extérieure (22) des filtres en bougie (21).

5. Filtre suivant la revendication 4, caractérisé en ce que la chambre de sortie (13A,13B) de chaque section de filtrage (7,8) est munie d'au moins deux systèmes distributeurs d'air comprimé (32A,32B) équipés de moyens destinés à souffler périodiquement et chacun à leur tour un courant d'air comprime a l'intérieur (24) d'une partie des filtres en bougie (21) et à éliminer ainsi les particules filtrées de la surface extérieure (22) de ces filtres en forme de bougie (21).

6. Filtre suivant la revendication 5, caractérisé en ce que les systèmes distributeurs d'air comprimé (32A,32B) sont composés de tuyaux concentriques (39) fixés à la paroi latérale (4) du corps du filtre (1) par des moyens de fixation montés radialement.

7. Filtre suivant l'une quelconque des revendications précédentes, caractérisé en ce que la sortie pour les particules filtrées est un tuyau d'évacuation (41,42) qui débouche dans un réservoir (43).

8. Filtre suivant la revendication 7, caractérisé en ce que le réservoir (43) contient un refroidisseur (44).

9. Filtre suivant l'une quelconque des revendications 7 et 8, caractérisé en ce que le réservoir (43) est équipé de moyens (50) destinés à éliminer les particules filtrées du réservoir (43) et à maintenir le niveau de ces particules dans le réservoir (43) de telle sorte que le tuyau d'évacuation (41,42) qui débouche dans le réservoir (43) reste bouché par les particules filtrées.

10. Filtre suivant l'une quelconque des revendications précédentes, caractérisé en ce que tous ses éléments en contact avec les gaz à filtrer ou filtrés ou avec les particules filtrées résistent à des températures de 900°C.

11. Filtre suivant l'une quelconque des revendications précédentes, caractérisé en ce que tous ses éléments en contact avec les gaz à filtrer ou filtrés ou avec les particules filtrées résistent chimiquement jusqu'à 900°C aux gaz de fumée contenant des composés sulfureux et/ou des composés chlorés.

12. Filtre suivant l'une quelconque des revendications précédentes, caractérisé en ce que le corps du filtre (1) contient au moins deux sections de filtrage (7,8) superposées.

13. Filtre suivant la revendication 12, caractérisé en ce que la sortie pour les gaz filtrés de chaque section de filtrage (7,8), à l'exception de la section supérieure (8), est une chambre annulaire (28B) qui, dans le bas, est en liaison ouverte avec la chambre de sortie (13A) de la section de filtrage immédiatement inférieure (7) et qui est délimitée latéralement par la paroi latérale cylindrique (4) du corps du filtre (1) et par une paroi latérale cylindrique concentrique (27B) de la chambre d'entrée (12B) de la section de filtrage immédiatement supérieure (8) et est délimitée, dans le haut, par la partie horizontale (14B) du gradin annulaire supérieur de la paroi de séparation (11B) de la section de filtrage immédiatement supérieure (8), des ouvertures (20) étant pratiquées dans cette partie horizontale (14B) pour permettre à la chambre annulaire (28B) d'être en liaison avec la chambre de sortie (13B) de la section de filtrage immédiatement supérieure (8).

14. Filtre suivant l'une quelconque des revendications 12 et 13, caractérisé en ce que le moyen d'évacuation des particules filtrées de chaque section de filtrage (8), à l'exception de la section inférieure, est un tuyau d'évacuation vertical (42) relié à la partie étroite de la paroi inférieure en forme d'entonnoir (9B) de la section de filtrage (8) et placé concentriquement dans le tuyau d'évacuation (41) de la section de filtrage (7) immédiatement inférieure.

## Claims

1. Filter for the continuous filtration at temperature of at least 500°C of flue gases laden with solid particles, which filter is composed of a filter body (1) which contains at least one filtering section (7,8) comprising a space which is divided into an inlet chamber (12A,12B) and an outlet chamber (13A,13B) by means of a separation wall (11A,11B) into which are fitted multiple tube filters (21) which are closed at one end, the exterior surface (22) and the closed end (23) of the multiple tube filters (21) being located in the inlet chamber (12A,12B), and the interior (24) of the multiple tube filters ending in the outlet chamber (13A,13B), the inlet chamber (12A,12B) being equipped with at least one inlet (25A,25B) for the gases to be filtered and with at least one outlet (41,42) for the particles separated off by filtration, and the outlet chamber (13A,13B) being equipped with at least one outlet (28B,30) for the filtered gases; in which the filter body (1) has an essentially cylindrical sidewall with a vertical axis, and in which each filtering section (7,8) is delimited at the bottom by a funnel-shaped evacuation wall (9A, 9B), the downwardly-oriented narrow part of which is connected to a means (41,42) for evacuating the particles separated off by filtration, and in which the body of the filter (1) as well as the internal walls (4,9A,9B,10,11A,11B,27A,27B), and the multiple tube filters (21) of each filtering section (7,8) are composed of refractory substances and are arranged so that they are radial or concentric and essentially symmetric relative to the vertical axis of the cylindrical sidewall (4) of the body of the filter (1);
characterized in that the separation wall (11A,11B) of each filtering section (7,8) is composed of a structure which diminishes downwards and has annular steps, the inlet chamber (12A,12B) and the outlet chamber (13A,13B) of the filtering section being located respectively below and above this separation wall (11A,11B) the inlet chamber (12A,12B) of each section being thus delimited at the bottom by the funnel-shaped evacuation wall (9A,9B) and at the top by the separation wall (11A,11B), the one or more inlets (25A,25B) for the gases to be filtered being situated in the wide part of the inlet chamber (12A,12B), the multiple tube filters (21) being fitted essentially vertically into holes (20) provided in the horizontal parts (14A,14B,16A,16B) of the annular steps, each filtering section comprising at least two reinforcing ribs (17A,17B) supporting the annular steps of the separation wall (11A,11B) and which are joined in radial direction to the sidewall (4) of the body of the filter (1), all of the elements of the filter coming into contact with the flue gases and/or the solid particles, with the exception of the multiple tube filters (21), being made from stainless steel withstanding the operating temperature of the filter and the sidewall (4) of the body of the filter (1) being thermally insulated on the outside (5).

2. Filter according to Claim 1, characterized in that the body of the filter (1) bears on at least three supports (2) which are joined together and one of which is joined fixedly to the body of the filter (1), whereas the others are equipped with a horizontal roller bearing (58) such that the axis of each roller (58) is placed perpendicularly to a straight line pointing towards the fixed support (2).

3. Filter according to any one of the preceding claims, characterized in that at least one distribution wall (26A,26B) is placed in each filtering section (7,8) between the multiple tube filters (21) and the inlet (25A,25B) for the gases to be filtered.

4. Filter according to any one of the preceding claims, characterized in that the outlet chamber (13A,13B) of each filtering section (7,8) is equipped with at least one compressed-air distribution system (32A,32B) equipped with means which are intended periodically to blow a stream of compressed air inside (24) at least some of the multiple tube filters (21) and intended thus to eliminate the filtered particles from the exterior surface (22) of the multiple tube filters (21).

5. Filter according to Claim 4, characterized in that the outlet chamber (13A,13B) of each filtering section (7,8) is equipped with at least two compressed-air distribution systems (32A,32B) which are equipped with means intended periodically, and each in turn, to blow a stream of compressed air inside (24) some of the multiple tube filters (21) and intended thus to eliminate the filtered particles from the exterior surface (22) of these multiple tube filters (21).

6. Filter according to Claim 5, characterized in that the compressed-air distribution systems (32A,32B) are composed of concentric pipes (39) which are fixed to the sidewall (4) of the body of the filter (1) by fastening means fitted radially.

7. Filter according to any one of the preceding claims, characterized in that the outlet for the filtered-off particles is an evacuation pipe (41,42) which emerges in a tank (43).

8. Filter according to Claim 7, characterized in that the tank (43) contains a cooler (44).

9. Filter according to either one of Claims 7 and 8, characterized in that the tank (43) is equipped with means (50) which are intended to eliminate the filtered-off particles from the tank (43) and to maintain the level of these particles in the tank (43) such that the evacuation pipe (41,42) which emerges in the tank (43) remains blocked by the filtered-off particles.

10. Filter according to any one of the preceding claims, characterized in that all of its elements which are in contact with the gases to be filtered, or filtered gases or with the filtered-off particles withstand temperatures of 900°C.

11. Filter according to any one of the preceding claims, characterized in that all of its elements which are in contact with gases to be filtered or filtered gases or with the filtered-off particles, chemically withstand flue gases containing sulphurous and/or chlorine-containing compounds up to 900°C.

12. Filter according to any one of the preceding claims, characterized in that the body of the filter (1) contains at least two superposed filtering sections (7,8).

13. Filter according to Claim 12, characterized in that the outlet for the filtered gases of each filtering section (7,8), with the exception of the upper section (8), is an annular chamber (28B) which, in the bottom, is in open communication with the outlet chamber (13A) of the filtering section (7) immediately below and which is laterally delimited by the cylindrical sidewall (4) of the body of the filter (1) and by a concentric cylindrical sidewall (27B) of the inlet chamber (12B) of the filtering section (8) immediately above and is delimited, at the top, by the horizontal part (14B) of the upper annular step of the separation wall (11B) of the filtering section (8) immediately above, openings (20) being made in this horizontal part (14B) to allow the annular chamber (28B) to be in communication with the outlet chamber (13B) of the filtering section (8) immediately above.

14. Filter according to either one of Claims 12 and 13, characterized in that the means for evacuating the filtered-off particles from each filtering section (8), with the exception of the lower section, is a vertical evacuation pipe (42) joined to the narrow part of the lower funnel-shaped wall (9B) of the filtering section (8) and placed concentrically inside the evacuation pipe (41) of the filtering section (7) immediately below.

## Patentansprüche

1. Filter zum kontinuierlichen Filtern von mit festen Teilchen beladenen Abgasen bei einer Temperatur von zumindest 500°C, welches aus einem Filterkörper (1) besteht, der zumindest einen Filtrationsabschnitt (7, 8) mit einem Raum enthält, der in eine Einlaßkammer (12A, 12B) und eine Auslaßkammer (13A, 13B) durch eine Trennwand (11A, 11B) geteilt ist, in der rohrförmige Kerzenfilter (21) angebracht sind, die an einem Ende geschlossen sind, wobei sich die Außenfläche (22) und das geschlossenen Ende (23) der Kerzenfilter (21) in der Einlaßkammer (12A, 12B) befinden, und das Innere (24) der Kerzenfilter in die Auslaßkammer (13A, 13B) mündet, die Einlaßkammer (12A, 12B) mit zumindest einem Einlaß (25A, 25B) für die zu filternden Gase und mit zumindest einem Auslaß (41, 42) für die durch die Filtration abgetrennten Teilchen versehen ist, und die Auslaßkammer (13A, 13B) mit zumindest einem Auslaß (28B, 30) für die gefilterten Gase versehen ist, bei welchem der Filterkörper (1) eine im wesentlichen zylindrische Seitenwand mit einer vertikalen Achse aufweist, und bei welchem jeder Filtrationsabschnitt (7, 8) an der Unterseite von einer Abzugswand (9A, 9B) in Form eines Trichters begrenzt ist, dessen nach unten gerichteter enger Teil mit einem Abzugsmittel (41, 42) für durch die Filtration abgetrennte Teilchen verbunden ist, und bei welchem der Filterkörper (1) sowie die Innenwände (4, 9A, 9B, 10, 11A, 11B, 27A, 27B) und die Kerzenfilter (21) jedes Filtrationsabschnitts (7, 8) aus fernerfesten Materialien bestehen und radial oder konzentrisch und im wesentlichen symmetrisch in bezug auf die vertikale Achse der zylindrischen Seitenwand (41) des Filterkörpers (1) angeordnet sind;
dadurch gekennzeichnet, daß die Trennwand (11A, 11B) jedes Filtrationsabschnitts (7, 8) aus einer Struktur besteht, die sich nach unten verjüngt und ringförmige Stufen aufweist, wobei sich die Einlaßkammer (12A, 12B) und die Auslaßkammer (13A, 13B) des Filtrationsabschnitts unter bzw. über dieser Trennwand (11A, 11B) befinden, die Einlaßkammer (12A, 12B) jedes Abschnitts somit nach unten durch die Abzugswand (9A, 9B) und nach oben durch die Trennwand (11A, 11B) begrenzt ist, der oder die Einlässe (25A, 25B) des zu filternden Gases im großen Teil der Einlaßkammer (12A, 12B) angeordnet ist bzw. sind, die Kerzenfilter (21) im wesentlichen vertikal in Löchern (20) angebracht sind, die in den horizontalen Teilen (14A, 14B, 16A, 16B) der ringförmigen Stufen vorgesehen sind, jeder Filtrationsabschnitt zumindest zwei Verstärkungsrippen (17A, 17B) aufweist, die die ringförmigen Stufen der Trennwand (11A, 11B) stützen, und die in radialer Richtung an der Seitenwand (4) des Filterkörpers (1) befestigt sind, alle mit den Abgasen und/oder mit den festen Teilchen in Kontakt gelangenden Elemente, mit Ausnahme der Kerzenfilter (21), aus rostfreiem Stahl bestehen, der gegenüber der Betriebstemperatur des Filters beständig ist, und die Seitenwand (4) des Filterkörpers (1) außen mit einer Wärmeisolierung (5) versehen ist.

2. Filter nach Anspruch 1, dadurch gekennzeichnet, daß der Filterkörper (1) auf zumindest drei Stützen (2) aufliegt, die miteinander verbunden sind, und von denen eine fest mit dem Filterkörper (1) verbunden ist, wahrend die anderen derart mit einem horizontalen Rollenlager (58) versehen sind, daß die Achse jeder Rolle (58) rechtwinkelig zu einer zur festen Stütze (2) gerichteten Geraden angeordnet ist.

3. Filter nach einem der vorhergehenden Ansprüche, dadurch gekennzeichnet, daß zumindest eine Trennwand (26A, 26B) in jedem Filtrationsabschnitt (7, 8) zwischen den Kerzenfiltern (21) und dem Einlaß (25A, 25B) für die zu filternden Gase angeordnet ist.

4. Filter nach einem der vorhergehenden Ansprüche, dadurch gekennzeichnet, daß die Auslaßkammer (13A, 13B) jedes Filtrationsabschnitts (7, 8) mit zumindest einem Druckluft-Verteilersystem (32A, 32B) versehen ist, das mit Mitteln ausgestattet ist, die dazu bestimmt sind, periodisch einen Druckluftstrom in das Innere (24) zumindest eines Teils der Kerzenfilter (21) zu blasen und so die gefilterten Teilchen von der Außenfläche (22) der Kerzenfilter (21) zu entfernen.

5. Filter nach Anspruch 4, dadurch gekennzeichnet, daß die Auslaßkammer (13A, 13B) jedes Filtrationsabschnitts (7, 8) mit zumindest zwei Druckluft-Verteilersystemen (32A, 32B) versehen ist, die mit Mitteln ausgestattet sind, die dazu bestimmt sind, periodisch jeweils einen Druckluftstrom in das Innere (24) eines Teils der Kerzenfilter (21) zu blasen und so die gefilterten Teilchen von der Außenfläche (22) dieser Kerzenfilter (21) zu entfernen.

6. Filter nach Anspruch 5, dadurch gekennzeichnet, daß die Druckluft-Verteilersysteme (32A, 32B) aus konzentrischen Rohren (39) bestehen, die an der Seitenwand (4) des Filterkörpers (1) durch radial angebrachte Befestigungsmittel befestigt sind.

7. Filter nach einem der vorhergehenden Ansprüche, dadurch gekennzeichnet, daß der Auslaß für die gefilterten Teilchen ein Abzugsrohr (41, 42) ist, das in ein Reservoir (43) mündet.

8. Filter nach Anspruch 7, dadurch gekennzeichnet, daß das Reservoir (43) einen Kühler (44) enthält.

9. Filter nach einem der Ansprüche 7 und 8, dadurch gekennzeichnet, daß das Reservoir (43) mit Mitteln (50) ausgestattet ist, die dazu bestimmt sind, die gefilterten Teilchen aus dem Reservoir (43) zu entfernen und das Niveau dieser Teilchen im Reservoir (43) derart aufrechtzuerhalten, daß das Abzugsrohr (41, 42), das in das Reservoir (43) mündet, durch die gefilterten Teilchen abgedichtet bleibt.

10. Filter nach einem der vorhergehenden Ansprüche, dadurch gekennzeichnet, daß alle seine mit den zu filternden oder gefilterten Gasen oder mit den gefilterten Teilchen in Kontakt gelangenden Elemente gegenüber Temperaturen von 900°C beständig sind.

11. Filter nach einem der vorhergehenden Ansprüche, dadurch gekennzeichnet, daß alle seine mit den zu filternden oder gefilterten Gasen oder mit den gefilterten Teilchen in Kontakt gelangenden Elemente chemisch bis 900°C gegenüber den Abgasen beständig sind, die schwefelhaltige und/oder chlorierte Verbindungen enthalten.

12. Filter nach einem der vorhergehenden Ansprüche, dadurch gekennzeichnet, daß der Filterkörper (1) zumindest zwei übereinander angeordnete Filtrationsabschnitte (7, 8) enthält.

13. Filter nach Anspruch 12, dadurch gekennzeichnet daß der Auslaß für die gefilterten Gase jedes Filtrationsabschnitts (7, 8), mit Ausnahme des oberen Abschnitts (8), eine ringförmige Kammer (28B) ist, die an der Unterseite mit der Auslaßkammer (13A) des unmittelbar darunterliegenden Filtrationsabschnitts (7) in offener Verbindung steht, und dis seitlich von der zylindrischen Seitenwand (4) des Filterkörpers (1) und von einer konzentrischen zylindrischen Seitenwand (27B) der Einlaßkammer (12B) des unmittelbar darüberliegenden Filtrationsabschnitts (8) begrenzt ist, und die an der Oberseite vom horizontalen Teil (14B) der oberen ringförmigen Stufe der Trennwand (11B) des unmittelbar darüberliegenden Filtrationsabschnitts (8) begrenzt ist, wobei Offnungen (20) in diesem horizontalen Teil (14B) vorgesehen sind, um eine Verbindung der ringförmigen Kammer (28B) mit der Auslaßkammer (13B) des unmittelbar darüberliegenden Filtrationsabschnitts (8) zu gestatten.

14. Filter nach einem der Ansprüche 12 und 13, dadurch gekennzeichnet, daß das Abzugsmittel der gefilterten Teilchen jedes Filtrationsabschnitts (8), mit Ausnahme des unteren Abschnitts, ein vertikales Abzugsrohr (42) ist, das mit dem engen Teil der unteren Wand in Form eines Trichters (9B) des Filtrationsabschnitts (8) verbunden ist und konzentrisch im Anzugsrohr (41) des unmittelbar darunterliegenden Filtrationsabschnitts (7) angeordnet ist.
